# EUROPEAN PATENT APPLICATION

(11) **EP 3 998 203 A1**
(43) Date of publication of application: **18.05.2022**
(21) Application number: 21158182.2
(22) Date of filing: 19.02.2021
(51) Int. Cl.: B64C 25/40, B64C 25/50

(54) **AIRCRAFT LANDING GEAR ASSEMBLY AND AIRCRAFT**

(71) Applicant: Lilium eAircraft GmbH, 82234 Wessling (DE)
(72) Inventor: Muzafar, Qasim, 81379 Munich (DE)
(74) Representative: Schmidt, Steffen

(57) **Abstract**

The invention refers to an aircraft landing gear assembly for an aircraft, in particular a vertical take off and landing aircraft, comprising a mounting bracket configured to connect to an airframe of the aircraft, a least one wheel connected to and rotatable with respect to the mounting bracket about a horizontal rotational axis, an electric drive actuator including a first electromotor configured to turn the wheel around the horizontal rotational axis; and a steering actuator including a second electromotor configured to turn the at least one wheel and/or the mounting bracket around a vertical rotational axis; a single electronic control unit controlling both the electric drive actuator as well as the electric steering actuator.

## Description

### Field

The invention relates to an aircraft landing gear assembly, in particular a nose landing gear assembly. The invention also relates to an aircraft, in particular an aircraft capable of vertical take off and landing (VTOL), comprising such a landing gear assembly.

### Related Art

Aircraft capable of vertical take off and landing (VTOL) have the potential to incorporate both the advantages of helicopters, namely starting and landing using limited space and/or in rough terrain, as well as the advantages of conventional aircraft, such as high traveling velocities and cruising efficiently, with one another. Challenges in the design of VTOL aircraft include the necessity that, on the one hand, large propeller areas are required for the provision of a sufficient mass flow to create a thrust into the vertical direction for takeoff or landing, and at the same time limit the energy consumption. On the other hand, propellers must be configured for the least amount of aerodynamic resistance for cruising, when the lift is a dynamically created by means of suitable wing profiles. The reduction of energy consumption is particularly relevant in the case of electrically powered VTOL aircraft (eVTOL) such as the eVTOL aircraft described in Lilium^{®}'s patent applications US 2016/0023754 A1 and US 2016/03115221 A1.

For moving on the ground, conventional aircraft rely on tugs for towing or push-back or on their capability to taxi. During taxiing the thrust to drive the aircraft is very inefficiently provided by its propellers or jet engines which are designed for an optimal operating point only at much larger cruise flight velocities. Steering is awkwardly achieved using the rudder or in some cases through steering a nose wheel, tail wheel or tiller wheel, which is usually hydraulically actuated. Helicopters and VTOL aircraft may hover-taxi in ground effect, thereby consuming excessive amounts of energy.

An aircraft landing gear comprising an electronic wheel hub motor brake is described in US 7,226,018 B2. One or more wheels of the landing gear are provided with an electronic wheel hub motor/generator to drive them. The wheels may be driven by applying an electrical current through a stator disk. Two or more individually powered wheels may be rotated differently by controlling the electromotors of the individual wheels independently. To allow for steering during taxiing, a first tire may be rotated faster than the other tire to provide for a differential. Steering in place may alternatively be accomplished by motoring one nose wheel hub motor in a first direction and motoring the other nose wheel hub motor in the other direction. Nose steering shall be realized without the use of any mechanical actuators, such as push-pull actuators, rack and pinion, rotary actuators, and multiplying linkage mechanical systems, so as to avoid wear as well as any risk of malpositioning mechanical elements during flight.

### Description

It is an object of the invention to overcome the disadvantages of the prior art, in particular to provide particularly efficient means for taxiing aircraft, particularly VTOL, more particularly eVTOL, preferably minimizing the use of resources in terms of hardware, weight and energy consumption. This objective is solved by the subject matter of independent claim 1.

According to the invention, and aircraft landing gear assembly for an aircraft, particularly of VTOL aircraft, more particularly an eVTOL aircraft, comprises a mounting bracket configured to connect to an airframe of the aircraft, at least one wheel connected to and rotatable with respect to the mounting bracket about a horizontal axis H, and electric drive actuator, a steering actuator and a single electronic control unit controlling both the electric drive actuator as well as the electric steering actuator. The electric drive actuator includes a first electromotor configured to turn the wheel around the horizontal rotational axis H. The electric drive is adapted to cause a rolling motion of the wheel. It shall be understood, that the horizontal rotational axis H refers to the definition of the motion of the wheel in relation to the airframe; and does not necessarily need to be embodied by a rod-like mechanical axle component. In some embodiments, the mounting bracket may include one or more sections in the form of the mechanical axle component and/or shaft component adapted for rotation around the horizontal rotational axis H. The steering actuator includes a second electromotor configured to turn the at least one wheel and/or the mounting bracket around a vertical rotational axis V. The vertical rotational axis V relates to the motion of the wheel and/or mounting bracket in relation to the airframe and it does not necessarily need to be embodied by rod-like mechanical component, however, in some embodiments, the mounting bracket may at least sectionally be formed as a mechanical axle component and/or shaft component adapted for rotation around the vertical rotational axis V. The steering actuator is adapted to cause a steering motion of the wheel. The first electromotor is different from the second electromotor. The first and/or second electromotor may be provided with a respective gearbox for transferring and transforming typically relatively fast electromotor movement into relatively slow rolling motion or steering motion of the wheel. The rotation caused by the steering actuator of the wheel and possibly the bracket around the vertical horizontal axis V is to be understood to relate to their rotation in relation to the airframe. The airframe relates to the mechanical structure of the aircraft. In the context of this application, the airframe shall be considered to include the fuselage, wings and possibly empennage. The term airframe may exclude the propulsion system. The airframe may further be considered to include any other components of the undercarriage excluding the aforementioned aircraft landing gear assembly. The single electronic control unit maybe designated as integrated drive and steering control unit. The single electronic control unit of the steering actuator and drive actuator is adapted to function as a central signal- and power-hub for, on the one hand, receiving power supply aircraft power system as well as a directive commands from the aircraft flight control system, and for, on the other hand, determining and providing control signals and actuating energy to both the electric drive actuator as well as the steering actuator. Utilizing a single electronic control unit advantageously omits the need to provide respective individual control units for either the steering actuator or the drive actuator, thereby saving a number of components, space and weight. The use of a first electromotor to cause a rolling motion of the wheel of the aircraft landing gear assembly realizes as a very energy efficient means for taxiing the aircraft.

In one embodiment of the aircraft landing gear assembly, the first electromotor is an in-wheel motor. The term "wheel" shall generally be understood to include both the at least one tire as well as the hub the wheel. In this embodiment, the hub includes the first electromotor. Additionally, the hub includes a first gearbox or drive gearbox for transforming a relatively low torque provided by the first electromotor at relatively high RPM into relatively high torque required for moving the aircraft on the ground at relatively low RPM. Using an in-wheel motor allows for significant space reductions. It may be preferred that the wheel of the aircraft landing gear assembly includes exactly one tire, exactly two tires or more than two tires, wherein the tire or tires circumferentially surround the first electromotor and possibly the first gearbox. The axial extension of the first electromotor, preferably axial extension of the first electromotor together with the first gearbox, may be less than the axial extension of the tire(s) of the aircraft landing gear assembly.

According to a further embodiment of the aircraft landing gear assembly that may be combined with the previous ones, the second electromotor is configured to rotate the mounting bracket about the vertical rotational axis in relation to the airframe. The mounting bracket shall be rotatably fixed to the airframe. The rotatability of the mounting bracket may be limited to no more than ±90°, no more than ±60°, no more than ±45° or no more than ±30° around the vertical rotational axis V in relation to a straightforward path. With regard to the vertical rotational axis, the at least one wheel(s) of the aircraft landing gear assembly may be stationarily fixed to the mounting bracket, so that any rotational movement of the mounting bracket in relation to the airframe around the vertical rotational axis equals to an identical rotational movement of the wheel. By rotating the bracket together with the wheel in relation to the airframe, the aircraft may taxi even within tight constraints allowing the aircraft to access particularly difficult terrain and choosing the most energy efficient taxi path for example from a hangar to a point of vertical take off.

In one embodiment of the aircraft landing gear assembly, which may be combined with the other ones, the single electronic control unit is configured for receiving directive commands from a flight control system of the aircraft. In particular, the single electronic control unit may be configured for receiving directive commands determining both driving velocity as well as steering direction of the aircraft. The driving velocity can be a forward or backward velocity. Unlike prior art aircraft landing gear assemblies, where different electronic control units are configured for receiving either driving velocity commands or steering direction commands, the single electronic control unit of the aircraft landing gear assembly may be configured to receive and process both.

In a further development, the single electronic control unit has a singular input interface for receiving the directive commands from the flight control system, particularly including both driving velocity commands as well as steering direction commands, for controlling both the steering actuator and the electric drive actuator. Using singular input interface allows to use less wiring in the aircraft thereby reducing its weight.

In another further development, that may be combined with the aforementioned one, the single electronic control unit is configured to supply, on the basis of the directive commands received from the flight control system, position commands to the steering actuator, in particular on the basis of steering direction commands, and torque commands to the electric drive actuator, in particular on the basis of driving velocity commands.

In one particular embodiment of the landing gear assembly, the single electronic control unit comprises an integrated control unit, including a microcontroller, preferably exactly one microcontroller, for providing the torque commands and the position commands. By using the same microcontroller for determining a position commands and torque commands for the aircraft landing gear assembly to control the movement of the aircraft during taxiing, unnecessary redundancies can be dispensed with, which saves space and weight, thereby reducing the energy required to move the aircraft on the ground or in the air. The integrated control unit may be configured to receive directive commands from the flight control system and to translate these directive commands into torque commands and position commands. A torque command may be adapted to set a desired torque of an electromotor to cause the rotating motion of the first electromotor attached to the wheel so as to achieve a desired velocity of the aircraft during taxiing. A position command may be adapted to cause the second electromotor, which may be a step-motor, to cause the wheel and/or mounting bracket to occupy a desired angular position with regard to the vertical axis of rotation V, for instance relative to a rectilinear forwards or backwards driving direction, so as to determine the direction of the aircraft during taxiing.

In one embodiment of the aircraft landing gear assembly, the single electronic control unit has a single input interface for receiving power supply for powering both the steering actuator and the electric drive actuator from an electrical power supply system of the aircraft. Power supply wiring is in many cases particularly heavy, requiring relatively large cable diameters for transferring electrical power with little resistance, so that using just one interface and consequently only one cable for supplying power into the single electronic control unit for powering the first electromotor as well as the second electromotor may yield significant weight reductions.

Particularly, in an aircraft landing gear assembly, both the electronic drive actuator as well as the steering actuator share at least one of power electronics and/or inverter. Power electronics and/or inverters being required for controlling the first or second electromotor are relatively heavy so that using the same power electronics and/or inverter components of the single electronic control unit for both actuators allows to save component costs and weight.

In a further development of the aircraft landing gear assembly, the shared power electronics include at least one electronic filter component, in particular at least one high voltage filter component, such as a HVDC lightning filter, and EMI filter, DC link capacitor. High voltage filter components are relatively heavy such that sharing the same component for several applications allows to reduce weight and component costs.

The aircraft landing gear assembly may in particular be realized as an aircraft nose landing gear assembly. The first electromotor drives all of the wheels of the aircraft landing gear assembly, in particular of the aircraft nose landing gear assembly. Particularly, the first electromotor is adapted to cause a rolling motion of all of the tires connected to the mounting bracket of the aircraft landing gear assembly. The first electromotor may on the one hand be attached to a shaft-section of the mounting bracket and on the other hand to the tire of the wheel of the aircraft landing gear assembly and provide an electromagnetic force to rotate the tire in relation to the shaft section. The aircraft landing gear assembly may particularly include exactly one first electromotor for causing a rolling motion of the wheel(s) of the aircraft landing gear assembly. In particular, an aircraft landing gear assembly including multiple tires has no more than one electromotor for rotating them. Especially in an embodiment including exactly two or more tires, all of the tires may be powered exclusively by the first electromotor. It shall be clear that an aircraft may include an undercarriage with one aircraft landing gear assembly according to the invention and further support components, such as secondary landing gear assemblies, which may or may not be realized in accordance to the invention. Preferably, the undercarriage includes no more than two, preferably no more than one aircraft landing gear assembly, in particular aircraft nose landing gear assembly, according to the invention and all remaining the support components of the undercarriage are designed differently. Using only one first electromotor, redundant components and space shall be saved.

The invention may further relate to an aircraft including an aircraft landing gear assembly as mentioned above, wherein the aircraft is configured for carrying at least one human passenger and/or comprising at least one electrically powered flight propulsion system, preferably a flight propulsion system for electronic vertical takeoff and landing.

### Brief description of the drawings/figures

Preferred configurations of the invention are described in the dependent claims. The accompanying drawings illustrate the embodiments of the present disclosure and, together with the description, further serve to explain the principles of the embodiments and to enable a person skilled in the pertinent art to make and use the embodiments.
- Fig. 1: shows an aircraft with a landing nose landing gear assembly according to the invention;
- Fig. 2: shows a schematic view of a landing gear assembly according to the invention; and
- Fig. 3: shows a schematic illustration of single electronic control unit for the landing gear assembly of Fig. 2.

The exemplary embodiments of the present disclosure will be described with reference to the accompanying drawings. Elements, features and components that are identical, functionally identical and have the same effect are - insofar as is not stated otherwise - respectively provided with the same reference character.

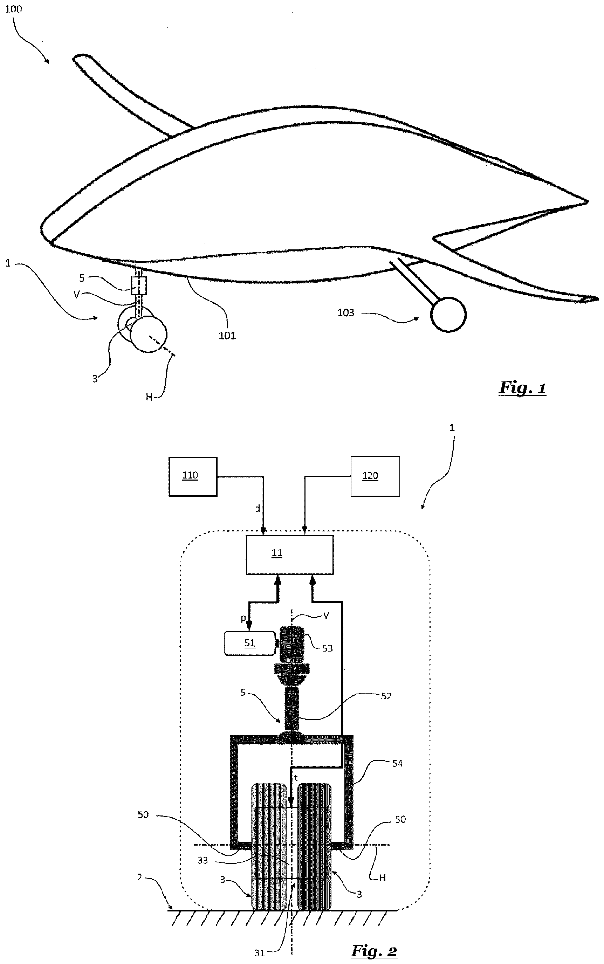

Figure 1 illustrates an exemplary embodiment of an eVTOL aircraft 100 comprising a nose aircraft landing gear assembly 1 equipped with a pair of wheels 3 attached to the airframe 101 with a mounting bracket 5. The wheels 3 are rotatable around the horizontal axis H which extends essentially in parallel to the ground level 2 on which the aircraft 100 is taxiing and on which the wheels 3 perform a rolling motion. The mounting bracket 5 can be rotated about the vertical axis V to render the aircraft 100 capable of being steered during taxiing. The undercarriage 103 of the aircraft 100 comprises additional wheels attached to the airframe 101.

Fig. 2 shows a schematic illustration of an aircraft landing gear assembly 1 according to the invention which may, for instance, be used as the aircraft nose landing gear assembly 1 of the aircraft 100 shown in Fig. 1.

The landing gear assembly 1 includes as its main constituents a mounting bracket 5, a wheel 3 rotatably attached to the bracket 5, an electric drive actuator 31 including a first electromotor 33 for imposing a rotating motion onto the wheel 3, a steering actuator 51 including a second electromotor 53 adapted to adjust the direction of the wheel 3 for steering the aircraft 100 during taxiing, and a single electronic control unit 11.

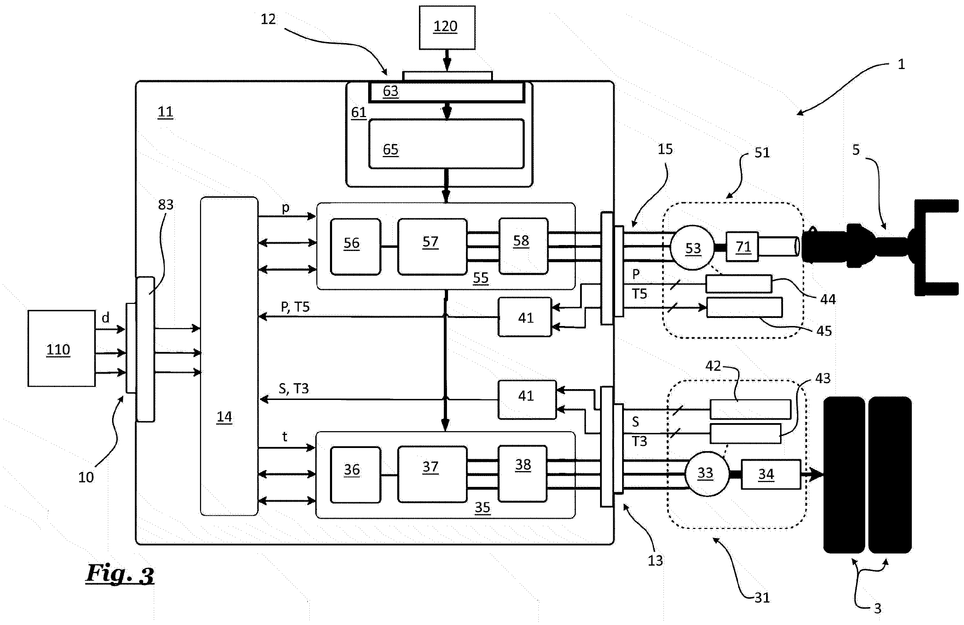

The single electronic control unit 11 acts as a data- and energy-hub. The single electronic control unit 11 receives directive controls d from the flight control system 110 of the aircraft 100. The control unit 11 includes electronics that will be described in further detail below with regard to Fig. 3. The electronics of the control unit 11 include a controller 14 configured to receive the directive commands d and derive position commands p for the steering actuator 51 and torque commands t for the electronic drive actuator 31 therefrom. The controller 14 combines the drive control and steering control functions within a single component to minimize the required volume, weight and number or parts.

The electronic control unit 11 provides torque commands t to the electronic drive actuator 31 which powers an electromotor 33 so as to cause a rotating motion of the wheels 3 for moving the aircraft 100 on the ground 2. The first electromotor 33 of the assembly 1 may be realized as an in-wheel motor circumferentially surrounded by the tires of the wheels 3 of the landing gear assembly. The motor 33 is attached to an axle section 50 extending in parallel to the horizontal axis of rotation H. The mounting bracket 5 includes a fork section 54 connecting the horizontal axle section 50 carrying the wheels 3 and the first electromotor 33 to a vertical shaft section 52 extending in parallel to the vertical axis of rotation V. The mounting bracket 5 connects the wheels 3 to the airframe 101 such that the weight of the aircraft 100 on the ground 2 is supported at least partially by the wheels 3 through the mounting bracket 5.

The electronic control unit 11 provides position commands p to the steering actuator 51 which determines the orientation of the wheels 3 for steering the movement of the aircraft 100 and the ground 2. A second electromotor 53 which may be realized as a stepper motor and/or coupled to the bracket 5 via a gearbox determines the rotary position of the wheel 3 in relation to the vertical axis of rotation V. The second electromotor 53 is configured to turn the shaft section 52 of the shaft 5 around the vertical axis of rotation 5 to align the wheels 3 in accordance with the desired orientation.

In order to power the first and second electromotor 33, 53, the single electronic control unit 11 is further configured to tap an electrical power supply system 120 of the aircraft 100. Electrical power is supplied to the electric drive actuator 31 and to the steering actuator 53 from the electrical power supply system 120 exclusively through the single electronic control unit 11.

Fig. 3 shows a schematic illustration of the electronics of the single electronic control unit 11. The single electronic control unit 11 receives directive commands d from the flight control system 110 via a command input interface 10 and electrical energy for powering the power electronics from the electrical power supply system (EPS) 120 via a power input interface 12.

The control unit 11 communicates electrical power to the steering actuator 51 and the electric drive actuator 31. The control unit 11 sends respective control commands, such as position commands p and/or torque commands t, to the steering actuator 51 and the electric drive actuator 31 and receives signals, particularly sensor signals, for instance temperature sensor signals T3, T5, position sensor signals P and/or speed sensor signals S from the steering actuator 51 and/or electric drive actuator 31.

The command input interface 10 may be realized as a conventional bus-system, such as a CAN-bus-system. The command input interface 10 may comprise at least one electromagnetic filtering means, such as an EMI-filter and/or a galvanic isolation.

The electrical drive actuator 31 includes the motor 33 and gearbox 34 for imposing rotary motion onto the wheels 3 of the aircraft 100. In order to allow for a controlled movement, the electrical drive actuator 31 is further provided with a speed sensor 42 configured for providing a speed sensor signal S corresponding to the velocity of the rotary motion of the wheels 3. In order to avoid defects and failures, a temperature sensor 43 may be provided to the electric drive actuator 31 for detecting at least one of the temperature of the first electromotor 33, the temperature of the gearbox 34, or the temperature of a mechanical brake (not shown). The temperature sensor 43 provides a temperature sensor signal T3 corresponding to a temperature of the electric drive actuator 31.

In a similar manner, the steering actuator 51 comprises the second electromotor 53 and gearbox 71 coupled thereto. The electromotor 53 is coupled to the mounting bracket 5 so as to set a desired rotary orientation of the wheel 3 and bracket 5 in relation to the vertical axis of rotation V. The steering actuator 51 further comprises a position sensor 44 configured to provide a position sensor signal P corresponding to the actual rotary orientation of the wheel 3 (and, possibly, bracket 5) in relation to the vertical axis of rotation V. Furthermore, the steering actuator 51 may comprise a temperature sensor 44 configured to provide temperature sensor signal T5 corresponding to a temperature of the steering actuator 51.

The electronic control unit 11 receives the sensor signal(s) from the electronic drive actuator 31 and of the steering actuator 51 and may comprise one or more means 41 configured for signal conditioning of at least one of the sensor signals S, T3, T5 or P. The controller 14 receives the at least one sensor signal S, T3, T5, or P and may take the sensor signal(s) into consideration for the provision of the at least one command signal p, t.

The single electronic control unit 11 includes several power electronics 35, 55, 61. the electronic control unit 11 includes power electronics 55 acting as a steering power module and power electronics 35 acting as a drive power module. The same power electronics components 35, 55 of the single electronic control unit 11 may be realized as shared electronic components of both the steering actuator 51 and the drive actuator 31.

Power electronics 35, 55 of the drive actuator 31 and the steering actuator 51 may additionally comprise at least one gate driver 36, 56, at least one power MOSFET 37, 57 and/or at least one current and voltage sensor 38, 58.

Shared electronics may particularly include the controller 14 configured as processing and control logic, DC link module 65, the power input interface 12, particularly EMI filtering 63 of power supply, and/or the control signal input interface 10, particularly EMI 83 filtering of directive control signals d. Additionally or alternatively, internal voltage generation blocks of the control unit 11 may be provided as a shared electronics component for both the electrical drive actuator 31 and the steering actuator 51. Shared electronics are preferably present no more than once in the single electronic control unit 11.

The power electronics 35, 55 of the drive actuator 31 and steering actuator 51 receive respective command signals, particularly a torque command signal t and a position command signal p from the controller 14. The respective command signal can be transferred as an on/off signal, a PWM-signal and/or as an analog signal. Using the same controller 14 to manage several control functions also reduces NRC cost.

The power electronics are supplied with electrical power from the electrical power supply system 120 through a single power input interface 12. In particular, this power input interface 12 may include a high-voltage DC-connector. The power input interface 12 includes power electronics filtering means 61, such as at least one HVDC lightning filter, at least one EMI-filter 63 and/or at least one DC link capacitor 65.

The single electronic control unit 11 may comprise an encasing encapsulating the electronic components therein, such as the controller 14, the power electronics 35, 55, and further electronics such as electronic filters and/or signal conditioners. The encasing may comprise interfaces, such as the control signal input interface 10 and the power input interface 12 and actuator control interfaces 13, 15, may be provided to connect the control unit 11 with external components.

Embodiments may be implemented in hardware (e.g., circuits), firmware, software, or any combination thereof. Embodiments may also be implemented as instructions stored on a machine-readable medium, which may be read and executed by one or more processors. A machine-readable medium may include any mechanism for storing or transmitting information in a form readable by a machine (e.g., a computer). For example, a machine-readable medium may include read only memory (ROM); random access memory (RAM); magnetic disk storage media; optical storage media; flash memory devices; electrical, optical, acoustical or other forms of propagated signals (e.g., carrier waves, infrared signals, digital signals, etc.), and others. Further, firmware, software, routines, instructions may be described herein as performing certain actions. However, it should be appreciated that such descriptions are merely for convenience and that such actions in fact results from computing devices, processors, controllers, or other devices executing the firmware, software, routines, instructions, etc. Further, any of the implementation variations may be carried out by a general-purpose computer.

For the purposes of this discussion, the terms "electronics" or "electronic unit" shall be understood to be circuit(s), processor(s), logic, or a combination thereof. A circuit includes an analog circuit, a digital circuit, state machine logic, data processing circuit, other structural electronic hardware, or a combination thereof. A processor includes a microprocessor, a digital signal processor (DSP), central processor (CPU), application-specific instruction set processor (ASIP), graphics and/or image processor, multi-core processor, or other hardware processor. The processor may be "hard-coded" with instructions to perform corresponding function(s) according to aspects described herein. Alternatively, the processor may access an internal and/or external memory to retrieve instructions stored in the memory, which when executed by the processor, perform the corresponding function(s) associated with the processor, and/or one or more functions and/or operations related to the operation of a component having the processor included therein.

The features disclosed in the above description, in the figures and in the claims can be of importance both individually and in any combination for the realization of the invention in its various configurations.

### Reference Numbers

- 1: Aircraft landing gear assembly
- 2: ground
- 3: wheel
- 5: mounting bracket
- 10: command input interface
- 12: power input interface
- 11: single electronic control unit
- 13, 15: actuator control interface
- 14: controller
- 31: electric drive actuator
- 33: first electromotor
- 34, 71: gearbox
- 35, 55, 61: power electronics
- 36, 56: gate driver
- 37, 57: power MOSFET
- 42: speed sensor
- 43, 45: temperature sensor
- 41: signal conditioning means
- 44: position sensor
- 50: axle section
- 51: steering actuator
- 52: shaft section
- 53: second electromotor
- 54: fork section
- 63, 83: EMI filter
- 65: DC link capacitor
- 100: aircraft
- 101: airframe
- 103: undercarriage
- 110: flight control system
- 120: electrical power system

- d: directive commands
- p: position commands
- P: position sensor signal
- t: torque commands
- T3, T5: temperature sensor signal
- S: speed sensor signal
- H: horizontal rotational axis
- V: vertical rotational axis

## Claims

1. Aircraft landing gear assembly (1) for an aircraft, in particular a vertical take off and landing aircraft (100), comprising
a mounting bracket (5) configured to connect to an airframe of the aircraft,
a least one wheel (3) connected to and rotatable with respect to the mounting bracket about a horizontal rotational axis (H),
an electric drive actuator (31) including a first electromotor (33) configured to turn the wheel (3) around the horizontal rotational axis (H); and
a steering actuator (51) including a second electromotor (53) configured to turn the at least one wheel (3) and/or the mounting bracket (5) around a vertical rotational axis (V);
a single electronic control unit (11) controlling both the electric drive actuator (31) as well as the electric steering actuator (51).

2. Aircraft landing gear assembly (1) according to claim 1, wherein the first electromotor (33) is an in-wheel motor.

3. Aircraft landing gear assembly (1) according to one of the preceding claims, wherein the second electromotor (53) is configured to rotate the mounting bracket (5) about the vertical rotational axis (V) in relation to the airframe (101).

4. Aircraft landing gear assembly (1) according to one of the preceding claims, wherein the single electronic control unit (11) is configured for receiving directive commands (d) from a flight control system (110) of the aircraft (100).

5. Aircraft landing gear assembly (1) according to claim 4, wherein the single electronic control unit (11) has single input interface (10) for receiving the directive commands (d) from the flight control system (110) for controlling both steering actuator (51) and electric drive actuator (31).

6. Aircraft landing gear assembly (1) according to claim 4 or 5, wherein the single electronic control unit (11) is configured to supply position commands (p) to the steering actuator (51), and torque commands (t) to the electric drive actuator (31), on the basis of the directive commands (d).

7. Aircraft landing gear assembly (1) according to claim 6, wherein the single electronic control unit (11) comprises an integrated control unit including exactly one controller, such as a microcontroller (14), adapted to provide the torque commands (t) and the position commands (p).

8. Aircraft landing gear assembly (1) according to one of the preceding claims, wherein the single electronic control unit (11) has single power input interface (12) for receiving power supply for powering both steering actuator (51) and electric drive actuator (31) from an electrical power supply system (120) of the aircraft (100).

9. Aircraft landing gear assembly (1) according to one of the preceding claims, wherein both the electric drive actuator (31) as well as the steering actuator (51) share at least one of power electronics (35, 55, 61) and/or inverter.

10. Aircraft landing gear assembly (1) according to claim 9, wherein the shared power electronics include (35, 55, 61) at least one electronic filter component, such as a HVDC lighting filter, an EMI filter (63) and/or a DC link capacitor (65)

11. Aircraft nose landing gear assembly (1) according to one of the preceding claims, wherein the first electromotor (33) drives all wheels (3) of the aircraft nose landing gear assembly (1).

12. Aircraft (100) configured for carrying at least one human passenger and comprising at least one electrically powered flight propulsion system and at least one aircraft landing gear assembly (1) according to one of the preceding claims.
